Europäisches Patentamt

European Patent Office

Office européen des brevets

(19)

(11) Numéro de publication: **0 263 014 B1**

# (12) FASCICULE DE BREVET EUROPEEN

(45) Date de publication de fascicule du brevet:
**27.11.91**

(51) Int. Cl.⁵: **G06F 15/40**, G11B 20/12

(21) Numéro de dépôt: **87402075.3**

(22) Date de dépôt: **17.09.87**

(54) **Procédé de gestion de fichiers sur un support d'information non-effacable.**

(30) Priorité: **19.09.86 FR 8613144**

(43) Date de publication de la demande:
**06.04.88 Bulletin 88/14**

(45) Mention de la délivrance du brevet:
**27.11.91 Bulletin 91/48**

(84) Etats contractants désignés:
**DE GB**

(56) Documents cités:

**PROCEEDINGS OF THE INTERNATIONAL CONFERENCE ON DATA ENGINEERING, Los Angeles, 24-27 avril 1984, pages 175-180, IEEE, New York, US; P. RATHMANN: "Dynamic data structures on optical disks"**

**ACM PODS, 1982, pages 239-246, ACM; D. MAIER: "Using write-once memory for database storage"**

**IBM TECHNICAL DISCLOSURE BULLETIN, vol. 24, no. 1B, juin 1981, pages 775,776, New York, US; D.D. GROSSMAN: "Updating non-erasable storage"**

**ANGEWANDTE INFORMATIK, vol. 15, no. 1, janvier 1973, pages 21-24, Braunschweig, DE; H.-J. SKRONN: "Verwaltung einer Datenbank durch eine Hierarchie von Wörterbüchern"**

(73) Titulaire: **Picard, Michel**
**16, Cours du Buisson**
**F-77420 Noisiel(FR)**

(72) Inventeur: **Picard, Michel**
**16, Cours du Buisson**
**F-77420 Noisiel(FR)**

(74) Mandataire: **Mongrédien, André et al**
**c/o BREVATOME 25, rue de Ponthieu**
**F-75008 Paris(FR)**

## Description

La présente invention a pour objet un procédé de gestion de fichiers sur un support d'information non-effaçable. Ces supports sont utilisés en particulier pour l'archivage d'informations volumineuses, en raison de leur faible coût. Ils tendent à être employés de plus en plus dans les applications d'archivage de fichiers et de documents numérisés.

Le disque optique numérique constitue un exemple de support d'information non-effaçable. Sur un tel support, il est possible d'écrire une information à tout moment, mais il n'est pas possible de modifier une information écrite. Un tel support est dit de type "WORM".

Un procédé de gestion de fichiers est un procédé qui permet d'enregistrer des données sur un support d'information, suivant une certaine structure permettant un accès rapide à ces données. Un procédé de gestion de fichiers doit donc permettre l'enregistrement, la lecture et la modification de différents types d'objets, parmi lesquels des répertoires, des données représentant le contenu de fichiers et des descripteurs pour décrire les caractéristiques des fichiers et des répertoires enregistrés.

De manière classique, les objets sont enregistrés sous la forme d'une arborescence dont les noeuds terminaux sont les fichiers et les autres noeuds des répertoires.

Les supports d'information non-effaçables, tels que le disque optique numérique, sont des supports d'information dont le développement est très récent et qui tendent, dans un nombre croissant d'applications, à remplacer les supports d'information effaçables utilisés classiquement, tels que les disques ou disquettes magnétiques.

Les procédés de gestion de fichiers sur ces supports effaçables, tels que les procédés UNIX (marque déposée), MSDOS (marque déposée) ou autre ne peuvent pas être appliqués aux supports non-effaçables, car ces procédés supposent qu'il est possible de réécrire tout secteur d'information.

Des méthodes spécifiques ont donc été proposées pour gérer des fichiers sur un support d'information non-effaçable.

Certains procédés supposent l'association d'un support effaçable et d'un support non-effaçable. Les informations de contenu des fichiers sont enregistrées dans le support non-effaçable, et les informations de description sur le support effaçable. Ces procédés ne sont pas satisfaisants car ils ne permettent pas d'assurer le transport du support non-effaçable seul, et n'apportent pas un niveau de sécurité suffisant en cas de perte des données inscrites sur le support effaçable.

On connaît également des procédés de gestion de fichiers sur supports non-effaçables, dans lesquels toutes les informations sont enregistrées sur le support non-effaaçable.

Un premier procédé, appelé ISDOS, est décrit dans "ISDOS manual", 1985, de la société Information Storage Inc. Dans ce procédé, les informations de contenu sont enregistrées séquentiellement à partir de l'une des extrémités de l'espace de mémorisation (premier secteur de la piste la plus interne dans le cas d'un disque optique numérique), et les informations de description sont enregistrées séquentiellement à partir de l'autre extrémité de l'espace de mémorisation (premier secteur de la piste la plus externe dans le cas d'un disque optique numérique). Ce procédé permet donc de bien séparer les informations de description des informations de contenu, ce qui permet de faire une recherche rapide dans les informations de description et donc d'accéder rapidement à un fichier.

Cependant, ce procédé présente des limitations par rapport aux procédés de gestion de fichiers sur support effaçable, en ce qu'il ne permet d'avoir qu'un seul niveau de répertoire. Le procédé ISDOS ne respecte donc pas la structure arborescente des répertoires que l'on trouve classiquement dans les procédés de gestion de fichiers sur support effaçable. Ceci a notamment pour conséquence que deux fichiers différents, mais qui portent le même nom dans deux répertoires différents sur un support effaçable, sont transformés par le procédé ISDOS en deux versions du même fichier. De plus, l'existence d'un seul niveau de répertoire nécessite un parcours séquentiel de toutes les informations de description pour la recherche d'un fichier ou d'une version de fichier, ce qui se traduit par des temps de recherche excessifs ou des volumes de mémoire importants.

On connaît également un procédé de gestion de fichiers sur support non-effaçable permettant un enregistrement hiérarchique des répertoires suivant une arborescence. Ce procédé, appelé CDFS, est décrit dans "A file system for write-once and compact disks", 1985, de Simson L. Garfinkel, MIT Media Lab.

Dans ce procédé, le mécanisme d'allocation de l'espace de mémorisation est très simple, puisqu'il est séquentiel. Cependant ceci présente l'inconvénient que les répertoires, les fichiers, et les descripteurs sont enregistrés de façon continue et imbriqués dans le même espace. La recherche d'un fichier, qui nécessite le parcours séquentiel des répertoires et des descripteurs est ainsi perturbée par la présence des informations de contenu très volumineuses.

D'autre part, ce procédé ne prend pas en compte le problème des erreurs sur le support non-effaçable et suppose qu'un fichier, même volumineux, peut être enregistré en un seul bloc sur le support d'information non-effaçable. Cette hypothèse n'est pas vérifiée dans la pratique sur les supports non-effaçables actuels, tels que les disques optiques numériques.

Par ailleurs, le répertoire général, appelé DIRLIST, qui est le point de départ de toute méthode de recherche de fichier, est une structure volumineuse qui est réécrite en totalité à la fin de chaque transaction. Ceci peut conduire à une consommation importante de l'espace de mémorisation du support non-effaçable.

Enfin, les procédés ISDOS et CDFS partagent le défaut de ne prendre en compte que les fichiers informatiques classiques. Ils ne sont pas conçus pour gérer de façon efficace des structures de données différentes, telles que des pages de documents numérisées de type fac-similé.

L'invention a notamment pour but de remédier à ces inconvénients. L'invention a également pour but de proposer un procédé de gestion de fichiers sur un support non-effaçable qui présente une souplesse d'utilisation sensiblement identique à celle des procédés de gestion de fichiers connus pour supports effaçables.

L'invention a pour objet un procédé de gestion de fichiers sur un support d'information non-effaçable consistant à mémoriser des objets, tels qu'un en-tête, des fichiers, des répertoires et des descripteurs de répertoire ou de fichier, lesdits fichiers et répertoires contenant des données dont l'accès est défini par un objet de type descripteur associé à chacun desdits fichiers et répertoires, lesdits répertoires et lesdits fichiers étant mémorisés selon une architecture arborescente dont les fichiers forment les noeuds terminaux, ladite arborescence comprenant un répertoire racine, ce procédé étant remarquable en ce que l'espace de mémorisation du support non-effaçable est découpé en plusieurs segments formant une partition de cet espace de mémorisation, ladite partition comprenant au moins :

a) un premier segment pour mémoriser des versions successives d'un en-tête, lesdites versions étant inscrites séquentiellement dans ledit premier segment, chaque version d'en-tête comprenant au moins un champ d'identification du support, un champ de listage pour contenir la liste des paramètres physiques définissant les segments formant la partition de l'espace de mémorisation, et un champ de données pour contenir une première adresse physique, une deuxième adresse physique et une troisième adresse physique,

b) un deuxième segment pour mémoriser des versions successives d' une table de conversion pour convertir une adresse logique d'un descripteur en une adresse physique d'un descripteur, lesdites versions de ladite table étant inscrite séquentiellement dans ledit deuxième segment, chaque version de ladite table comprenant une table principale établissant une correspondance entre une adresse logique et une adresse physique, pour les adresses physiques des zones de l'espace de mémorisation contenant une information au moment de la création de ladite table principale ou pour les objets créés ultérieurement et correspondant à une nouvelle adresse logique, et une table supplémentaire établissant une correspondance entre une adresse logique et une adresse physique, pour les mises à jour des adresses logiques contenues dans la table principale, les adresses desdites tables principale et supplémentaire de la version la plus récente de la table de conversion étant inscrites lors de la mémorisation d'une nouvelle version d'entête respectivement dans la première adresse physique et dans la deuxième adresse physique du champ de données de ladite en-tête,

c) un troisième segment pour mémoriser des descripteurs de fichiers ou de répertoires, chaque descripteur comprenant au moins un préambule et un champ de listage, le préambule comprenant au moins un champ d'identification pour identifier le type (fichier ou répertoire) décrit et un champ de chaînage pour relier deux versions successives d'un même descripteur, et le champ de listage contenant la liste des adresses physiques et des longueurs des zones du support non-effacable contenant le fichier ou le répertoire, l'adresse physique du répertoire racine étant contenue dans la troisième adresse physique du champ de données de la version actuelle de l'en-tête,

d) un quatrième segment pour mémoriser des répertoires, chaque répertoire comprenant au moins un préambule et une liste d'opérations, le préambule comprenant au moins un identificateur de répertoire et un champ de chaînage pour relier deux versions successives d'un même répertoire, et la liste d'opérations comprenant la liste des adresses logiques des descripteurs de fichiers et de répertoires contenus dans ledit répertoire, et des codes d'opérations pour indiquer l'état existant ou supprimé de chacun desdits fichiers et répertoires dudit répertoire,

e) un cinquième segment pour mémoriser le contenu des fichiers.

Le procédé de l'invention se démarque des procédés connus de gestion de fichiers sur des supports non-effaçables d'une part par la structure des objets traités par ce procédé et d'autre part par le découpage de l'espace de mémorisation en une pluralité de segments qui sont chacun associés à un type d'objet particulier. La combinaison de ces deux éléments permet une gestion de fichiers très souple qui, pour un utilisateur, offre sensiblement les mêmes fonçtions que les procédés de gestion de fichiers sur support effaçable.

Par exemple, le procédé de l'invention permet d'améliorer la sécurité, notamment par la séparation des différents objets qui sont chacun mémorisés dans un segment particulier géré de manière indépendante.

Les caractéristiques et avantages de l'invention ressortiront mieux de la description qui va suivre, donnée à titre illustratif mais non limitatif, en référence aux dessins annexés, sur lesquels :

- la figure 1 illustre une partition en 5 segments de l'espace de mémorisation du support non-effaçable,
- la figure 2 illustre la structure d'un en-tête suivant un mode de réalisation préféré de l'invention,
- la figure 3 illustre le chaînage entre des versions successives de l'en-tête, lorsque ces versions sont situés dans le même segment et lorsqu'elles sont situées dans des segments différents,
- la figure 4 illustre la structure d'un descripteur suivant un mode de réalisation préféré de l'invention,
- la figure 5 illustre la structure d'un répertoire suivant un mode de réalisation préféré de l'invention,
- la figure 6 illustre la structure d'un fichier suivant un mode de réalisation préféré de l'invention,
- la figure 7 illustre le fonctionnement du procédé de gestion de fichiers de l'invention sur un support d'information non-effaçable, dont l'espace de mémorisation est segmenté conformément à la figure 1 et dont les objets enregistrés ont une structure conforme aux figures 2 à 6,
- la figure 8 est une arborescence comprenant des répertoires et des fichiers suivant une structure conforme aux objets enregistrés sur l'espace de mémorisation représenté sur la figure 7.

Selon l'invention, l'espace de mémorisation du support d'information non-effaçable est découpé en au moins 5 segments, chaque segment étant destiné à ne mémoriser qu'un seul type d'cbjet, l'ensemble des segments formant une partition de l'espace de mémorisation.

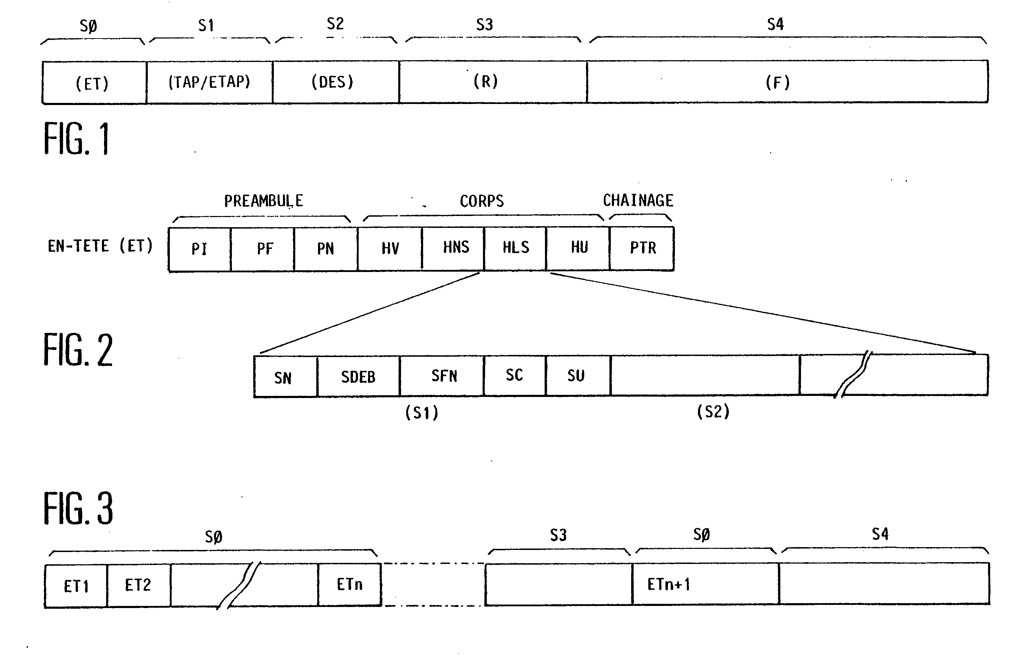

Dans le mode de réalisation de la figure 1, l'espace de mémorisation comprend 5 segments S0, S1, S2, S3 et S4 qui comprennent respectivement les objets suivants :

- des enregistrements d'en-tête ET pour mémoriser des informations fixes relatives au support, telles que son nom et la date de création, et des informations variables ou qui peuvent varier, telles que le taux de remplissage de l'espace de mémorisation et la partition,
- une table TAP pour convertir l'adresse logique d'un objet, donnée par l'utilisateur, en une adresse physique correspondante dans l'espace de mémorisation,
- des descripteurs DES pour mémoriser des informations de description des répertoires et des fichiers,
- des répertoires R, et
- des fichiers F pour enregistrer le contenu de fichiers.

Chaque segment défini sur l'espace de mémorisation constitue, d'un point de vue logique, un élément indépendant des autres segments. Cependant, chaque segment peut être constitué physiquement de plusieurs zones disjointes de l'espace de mémorisation si des moyens sont prévus pour permettre de mémoriser un lien logique entre les différentes zones disjointes d'un même segment.

On va maintenant décrire un mode de réalisation particulier de chacun des objets figurant dans les segments représentés sur la figure 1.

On a représenté sur la figure 2 une structure préférée pour l'information d'en-tête contenue dans le segment S0. L'en-tête se compose d'un préambule, d'un corps, et d'un champ de chaînage.

Le préambule est destiné à contenir des informations fixes. Il se compose de trois champs de données :

- un identificateur PI pour indiquer que l'objet mémorisé est un en-tête,
- un indice de format PF pour indiquer la structure exacte suivant laquelle les informations suivantes de l'en-tête sont mémorisées,
- un identificateur PN pour mémoriser un nom donné au support non-effaçable.

Le corps d'en-tête comprend les champs de données suivants :

- un numéro de version HV dont la valeur est incrémentée à chaque nouvelle version d'entête,
- un identificateur HNS pour indiquer le nombre de segments constituant la partition de l'espace de mémorisation,
- un champ de listage HLS pour indiquer la liste des segments définis sur l'espace de mémorisation, et
- un champ de données HU, contenant au moins trois adresses physiques AP0, AP1, AP2 pour repérer les descripteurs des tables principale et supplémentaire et le descripteur du répertoire racine.

Le champ de listage HLS comprend l'ensemble des informations définissant les segments formant la partition de l'espace de mémorisation.

Chaque segment y est défini par un ensemble de données, qui sont :

- un identificateur SN pour mémoriser le nom du segment,
- des champs d'adresse SDEB et SFIN pour mémoriser les adresses de début et de fin du segment,
- un champ d'adresse SC pour mémoriser l'adresse courante d'écriture dans le segment, c'est-à-dire le premier emplacement libre dans le segment, au moment de la mémorisation de l'en-tête, et
- un champ de données complémentaire SU réservé à l'utilisateur.

La troisième partie d'un enregistrement d'en-tête est le champ de chaînage contenant un pointeur PTR qui permet de relier deux versions successives de l'en-tête lorsque ces versions ne sont pas disposées de façon consécutive dans l'espace de mémorisation.

On a représenté sur la figure 2 un mode de réalisation préféré de l'en-tête. Il est clair cependant que d'autres structures d'en-tête sont possibles, notamment des structures d'en-tête obtenues par suppression de certains champs de données de la structure représentée sur la figure 2.

En particulier, il est possible de supprimer le champ de chaînage PTR si les versions successives de l'en-tête sont inscrites de manière consécutive dans l'espace de mémorisation. Il est également possible de supprimer les champs de données PN, HV, HNS, SN, SC et SU pour ne conserver que les fonctions essentielles d'identification de l'en-tête PI, de format PF et de description des différents segments HLS.

Cependant, les champs de données qui ne sont pas nécessaires présentent un intérêt, notamment en ce qui concerne la sécurité car ils permettent de retrouver plus facilement une information.

L'utilisation du champ de chaînage PTR est illustrée par la figure 3. On a représenté sur cette figure des versions successives de l'en-tête ET1, ET2, ..., ETn et ETn + 1.

Les n premières versions de l'en-tête sont inscrites de manière consécutive dans le segment S0. Dans ce cas, le champ de chaînage PTR de chaque en-tête n'est pas utilisé. En revanche, l'en-tête ETn + 1 n'est pas inscrit à la suite de l'en-tête ETn.

Ceci se produit lorsque l'en-tête ETn est inscrit dans le dernier emplacement libre du segment S0. Dans ce cas, il est nécessaire de modifier la partition de l'espace de mémorisation de manière à créer une extension au segment S0.

Ceci se produit également lorsque le segment S0 se compose de plusieurs zones disjointes et que l'en-tête ETn occupe le dernier emplacement libre dans une des zones du segment S0.

Dans les deux cas, le champ de chaînage de l'en-tête ETn est utilisé pour mémoriser l'adresse physique correspondant à l'emplacement dans lequel sera mémorisée la version successive d'en-tête ETn + 1. Cette adresse peut être inscrite dans le champ de chaînage de l'en-tête ETn au moment de l'écriture de ce dernier, ce qui permet de réserver l'emplacement pour l'inscription de l'en-tête ETn + 1. Il peut aussi être inscrit ultérieurement au moment de la mémorisation de l'en-tête ETn + 1.

Le demandeur a utilisé la structure d'en-tête de la figure 2 pour la gestion d'un disque optique numérique. Les valeurs choisies, titre d'exemple, pour les différents paramètres de l'en-tête décrit sont :

- identificateur d'en-tête PI : 4 octets,
- identificateur de format PF : 1 octet,
- nom du disque PN : 14 octets,
- numéro de version HV : 2 octets,
- nombre de segments HNS : 2 octets,
- nom d'un segment SN : 14 octets,
- données utilisateur SU : 10 octets,
- adresses SDEB, SFIN et SC : 4 octets chacune,
- données HU : 100 octets dont 12 octets réservés pour les première, deuxième et troisième adresses physiques,
- pointeur PTR : 2 octets, pour indiquer l'indice d'un segment.

Dans ce mode de réalisation, chaque segment est défini par cinq données SN, SDEB, SFIN, SC et SU, représentant une longueur de 36 octets. Les autres éléments PI, PF, PN, HN, HNS, HU et PTR ont une longueur fixe de 123 octets.

Pour un disque optique numérique organisé en secteurs, ayant chacun une longueur de 1024 octets, un secteur peut contenir un en-tête définissant une partition de l'espace de mémorisation en 25 segments. Si le nombre de segments de la partition est plus important, l'enregistrement de l'en-tête nécessite au moins deux secteurs.

On trouvera résumé ci-après les différentes opérations possibles sur le support non-effaçable en relation avec cette structure d'en-tête. On suppose, à titre d'exemple, que le support non-effaçable est un disque optique numérique organisé en secteurs.

INITIALISATION D'UN DISQUE OPTIQUE NUMERIQUE

Un segment noté S0 est réservé pour la mémorisation des versions successives de l'en-tête.

Une version initiale de l'en-tête, contenant le nom du disque PN, au moins le segment S0 et un indice de version HN = 1, est inscrite à l'adresse de début du segment S0.

MONTAGE D'UN DISQUE OPTIQUE NUMERIQUE

Le montage consiste à se positionner à l'adresse de début du segment SO, puis à lire successivement les versions de l'en-tête. La version la plus récente est celle qui est immédiatement suivie par un secteur vierge. Si le champ de chaînage d'un en-tête non nul est rencontré, la lecture se poursuit sur le segment désigné par ce champ.

La fonction qui réalise le montage reçoit en entrée le nom du disque, et vérifie que le champ HN contient bien ce nom.

## CREATION D'UNE VERSION D'EN-TETE

Une nouvelle version de l'en-tête peut être créée après l'opération de montage. La valeur HV est incrémentée de 1. L'information d'en-tête est inscrite à l'adresse courante SC du segment d'en-tête (segment S0) s'il n'y a pas de chaînage. Dans la nouvelle version de l'en-tête, cette adresse courante est augmentée de la longueur de cette nouvelle version de l'en-tête.

## CREATION D'UN SEGMENT

La création d'un segment consiste à renseigner chacun de ses champs (SN, SDEB, SFIN, SC et SU), puis à ajouter 1 au nombre de segments HNS et à créer une nouvelle version d'en-tête. La création simultanée de plusieurs segments donne lieu à la création d'une seule version d'en-tête.

## OUVERTURE D'UN SEGMENT

L'ouverture d'un segment se fait sur indication de son nom (SN) ou de son rang dans la liste des segments (HLS). Elle suppose que le montage du disque optique numérique a été réalisé au préalable. Elle donne lieu à la localisation de l'adresse courante entre l'adresse SC et l'adresse SFIN.

## LOCALISATION DE L'ADRESSE COURANTE

L'adresse courante d'un segment correspond au premier secteur vierge de ce segment dans le cas où l'écriture se fait par allocation séquentielle des secteurs de l'adresse SDEB à l'adresse SFIN.

La localisation de l'adresse courante est accélérée en prenant pour point de départ l'adresse SC obtenue lors de l'ouverture de la partition. La valeur de SC est égale à l'adresse courante réelle s'il n'y a pas eu d'écriture dans le segment depuis la création de la dernière version d'en-tête. Dans le cas contraire, elle est inférieure.

## ECRITURE DANS UN SEGMENT

L'écriture dans un segment qui a été préalablement ouvert, se fait à l'adresse courante, et pour un nombre entier N de secteurs. L'adresse courante est ensuite augmentée de N secteurs.

Lorsque l'adresse de fin SFIN est atteinte, le segment est plein et aucune écriture n'y est plus possible.

## LECTURE DANS UN SEGMENT

La lecture dans un segment, préalablement ouvert, se fait entre les adresses SDEB et SFIN. Les adresses peuvent être exprimées de façon absolue (déplacement par rapport au début du disque) ou de façon relative (déplacement par rapport à SDEB). Une tentative de lecture en dehors du segment retourne un code d'erreur.

Revenons maintenant à la figure 1. On a décrit en référence aux figures 2 et 3 une structure préférée pour un en-tête enregistré dans le segment S0. On va maintenant décrire une structure préférée pour un descripteur DES. Ce type d'objet est mémorisé dans le segment S2.

Un descripteur contient les informations nécessaires à l'accès au contenu d'un fichier ainsi que les caractéristiques descriptives du fichier, telles que la date de création, les droits d'accès ou autre. Les descripteurs s'appliquent aux fichiers de données proprement dits, aux répertoires, et aux tables de conversion adresse logique -adresse physique.

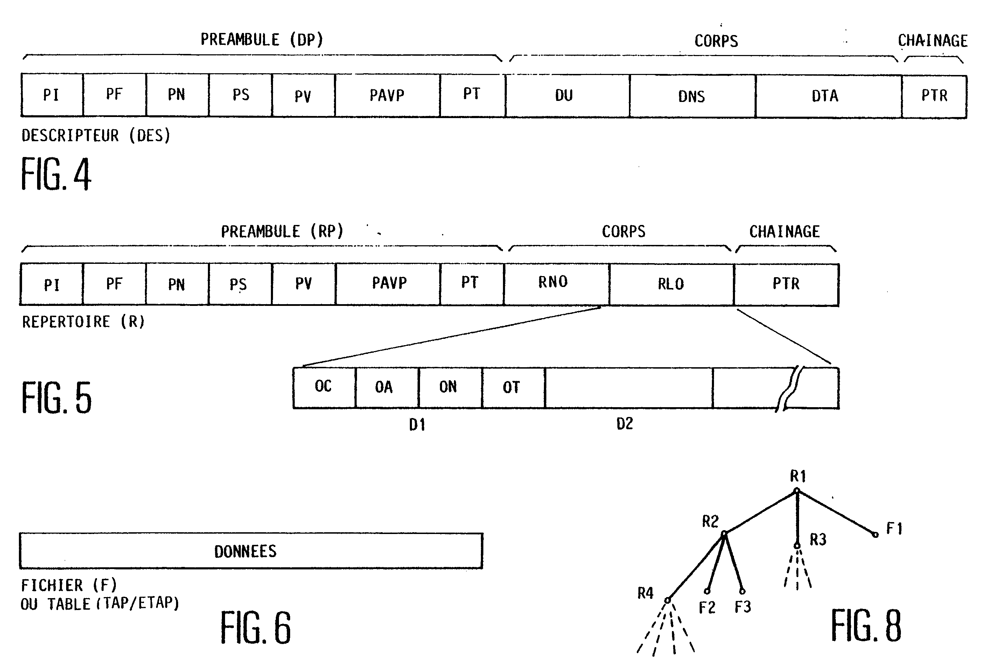

Une structure préférée pour un descripteur est représentée sur la figure 4. Chaque descripteur comprend un préambule pour contenir des données fixes, un corps pour contenir des données susceptibles de varier et un champ de chaînage pour permettre, en cas de besoin, une mise à jour des données contenues dans le corps du descripteur.

Le préambule comprend les champs de données suivants :
- un identificateur PI pour indiquer qu'il s'agit d'un descripteur,
- un indice de format PF pour déterminer la structure exacte des informations qui suivent,
- un identificateur de nom PN pour mémoriser une séquence de caractères formant le nom du descripteur,
- un numéro de séquence PS ; pour augmenter la sécurité des informations, le préambule est répété après chaque modification, le numéro de séquence étant incrémenté à chaque fois,
- un numéro de version PV contenant une valeur numérique identifiant la version actuelle du descripteur,
- un pointeur PAVP contenant l'adresse de la version précédente du descripteur, ce qui permet de relier par chaînage arrière les versions successives de ce descripteur,

- un champ de type PT pour distinguer les différents types de descripteurs (répertoire, fichier ou table)

Le corps du descripteur comprend trois champs de données qui contiennent des données pouvant varier au cours du temps :

- un champ de données utilisateur DU pour contenir des informations telles qu'une date de création, des droits d'accès à un fichier et d'autres caractéristiques similaires,
- un champ DNS contenant un entier positif indiquant le nombre de zones disjointes de l'espace de mémorisation dans lesquelles sont mémorisées les données du fichier, du répertoire ou de la table correspondant audit descripteur,
- un champ de listage DTA contenant la liste des adresses physiques des différentes zones de l'espace de mémorisation dans lesquelles sont contenues les données, et la longueur de chacune de ces zones.

Les données d'un fichier, d'un répertoire ou de la table de conversion peuvent bien entendu être mémorisées de manière consécutive dans l'espace de mémorisation. Le paramètre DNS a alors pour valeur 1 et le champ DTA contient une seule adresse physique et une seule indication de longueur.

Cependant, il peut être intéressant, notamment dans le cas d'un disque optique numérique dont l'espace de mémorisation est découpé en secteurs, de mémoriser les données dans des secteurs non-contigus soit parce que certains secteurs présentent des erreurs et sont inaccessibles en écriture, soit pour améliorer la sécurité des informations. Le champ DTA contient alors la liste des secteurs qui mémorisent les données.

Le descripteur comprend enfin un champ de chaînage PTR qui est utilisé pour permettre une mise à jour des informations contenues dans le corps du descripteur, notamment un ajout, un remplacement ou une suppression d'information contenue dans le corps du descripteur.

Le demandeur a décrit dans la demande de brevet français portant le numéro d'enregistrement 85 17670 déposé le 29 novembre 1985, à laquelle on pourra se reporter, un procédé de mise à jour et de lecture d'informations sur un support non-effaçable qui peut être utilisé pour la mise à jour d'un descripteur.

Comme on l'a indiqué à propos de la structure d'en-tête représentée sur la figure 2, il est possible de supprimer certains champs de données d'un descripteur, notamment PN, PS, PV, PT sans empêcher le fonctionnement du procédé de l'invention.

Cependant, la suppression de champs de données optionnels peut avoir des conséquences sur les performances du procédé de gestion de fichiers, notamment en ce qui concerne la possibilité de retrouver des informations dans le cas d'erreurs d'écriture ou de défauts de l'espace de mémorisation.

La figure 5 illustre une structure préférée pour les objets de type répertoire mémorisés dans le segment S3 de la figure 1. Chaque répertoire se compose d'un préambule, d'un corps de répertoire et d'un champ de chaînage.

De manière préférée, le préambule d'un répertoire a une structure identique au préambule d'un descripteur. La distinction entre un répertoire et un descripteur est obtenue par la valeur contenue dans le champ d'identification PI.

Le corps de répertoire comprend un premier champ RNO, qui indique un nombre d'opérations, et un deuxième champ RLO qui définit une liste d'opérations.

De manière classique, les fichiers sont mémorisés suivant une architecture arborescente, la racine et les noeuds intermédiaires de l'arbre étant constitués de répertoires et les feuilles, ou noeuds terminaux, de l'arbre étant constitués par les fichiers. Chaque noeud de type répertoire comprend donc plusieurs fils, de type répertoire et/ou fichier.

Le corps d'un répertoire permet précisément de mémoriser les répertoires et/ou les fichiers fils d'un répertoire. Le nombre de fils est mémorisé dans le champ RNO, et la liste des fils dans le champ RLO.

A chaque fils, est associée une opération comprenant 4 champs de données :

- un code d'opération OC, pour indiquer l'état -créé ou supprimé- du fils,
- un champ d'adresses logiques OA pour indiquer l'adresse logique du descripteur du fichier ou du répertoire fils,
- un champ ON pour contenir le nom dudit descripteur,
- un champ de type OT pour mémoriser le type - répertoire ou fichier- du descripteur.

Les deux derniers champs ON et OT sont facultatifs, mais permettent d'augmenter la vitesse de recherche dans la mémoire.

On a enfin représenté sur la figure 6 la structure des objets de type fichier F contenus dans le segment S4 ou de type table contenus dans le segment S1. Cette structure est particulièrement simple puisqu'elle se réduit uniquement à l'information de contenu du fichier ou de la table, sans insertion d'aucune autre information, par exemple de type préambule.

Les données d'un fichier ou d'une table peuvent être mémorisées de manière consécutive sur l'espace de mémorisation, ou peuvent être mémorisées dans plusieurs zones disjointes. Dans tous les cas, l'emplacement des données dans l'espace de mémorisation est indiqué par les informations contenues dans le champ DTA du corps du descripteur associé au fichier ou la table.

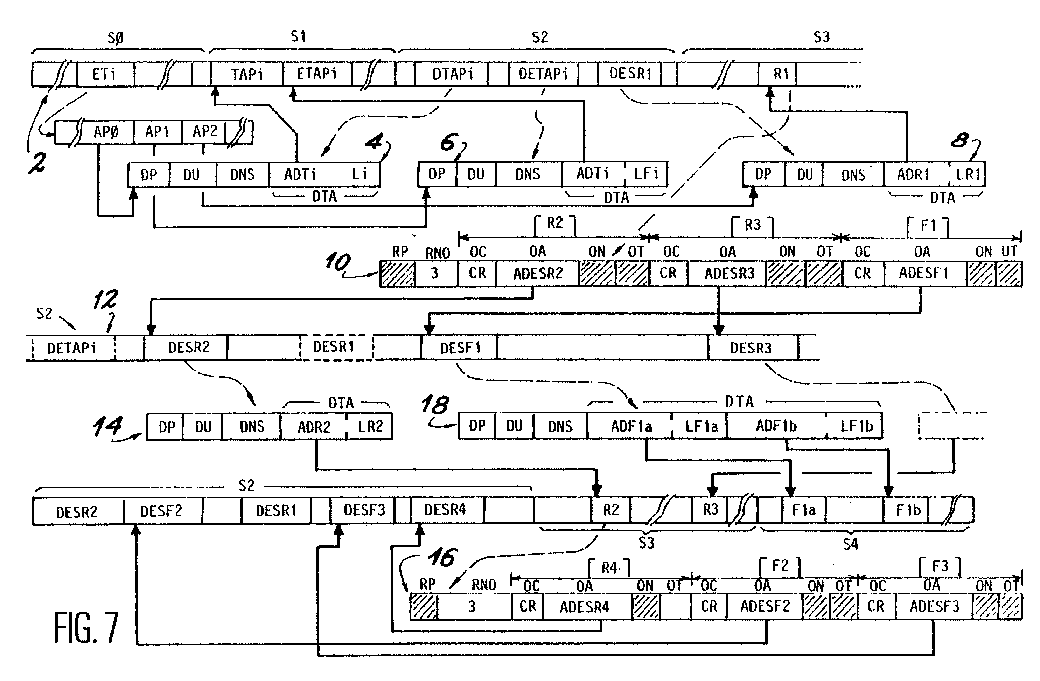

On a décrit en référence aux figures 2 à 6 des structures préférées pour chacun des objets manipulés par le procédé de gestion de fichiers de l'invention. On va maintenant préciser en référence à la figure 7 les relations logiques qui existent entre des objets différents et qui permettent la gestion des fichiers.

De manière classique, chaque fichier est rattaché à un répertoire et les répertoires sont imbriqués de manière hiérarchique définissant une arborescence. On a représenté sur la figure 8 une arborescence correspondant aux relations logiques de la figure 7.

Sur la figure 7, la référence 2 indique une partie de l'espace de mémorisation comprenant les segments S0 contenant les versions successives d'en-têtes, le segment S1 contenant les versions successives de la table de conversion, le segment S2 contenant les descripteurs et le segment S3 contenant les répertoires.

La première information permettant d'accéder au fichier contenu dans le support non-effaçable est l'ensemble des trois adresses physiques AP0, AP1, AP2 qui sont enregistrées dans le champ de données HU de la version actuelle de l'en-tête ETi. Ces adresses physiques désignent respectivement le descripteur de la table principale de conversion (TAP), le descripteur de la table supplémentaire de conversion (ETAP), et le descripteur du répertoire R1, constituant la racine de l 'arborescence (figure 8).

L'adresse physique AP0 désigne ainsi le descripteur DTAPi du segment S2 associé à la table principale de conversion. La référence numérique 4 rappelle la structure de ce descripteur, telle qu'on l'a décrite en référence à la figure 4. Le champ DTA contient les adresses et les longueurs de chacune des zones du segment S1 contenant les données de la table principale TAPi.

De la même manière, l'adresse physique AP1 est égale à l'adresse de début du descripteur DETAPi du segment S2 associé à la table supplémentaire. La référence 6 montre la structure détaillée de ce descripteur. Le champ DTA de ce descripteur contient la liste des adresses des zones du segment S1, ainsi que leurs longueurs, qui contiennent les données de la table supplémentaire ETAPi.

Ces deux tables sont des fichiers particuliers qui permettent d'établir une correspondance entre une adresse logique, reçue de l'extérieur par le procédé de gestion des fichiers, et une adresse physique, qui désigne l'emplacement réel de l'objet cherché dans l'espace de mémorisation du support non-effaçable.

Le premier fichier est une table principale TAP qui donne la liste des adresses physiques correspondant à l'adresse logique dont la valeur est égale au rang dans la table des objets mémorisés.

Les adresses logiques AL0, AL1 et AL2 peuvent être réservées respectivement pour désigner le descripteur de la table principale TAP, le descripteur de la table supplémentaire ETAP, et le descripteur du répertoire racine R1. Ces données sont redondantes avec les adresses physiques AP0, AP1 et AP2 ; elles augmentent la sécurité. Des adresses logiques nouvellement créées peuvent être ajoutées en séquence à cette table, par l'intermédiaire du champ de chaînage PTR de son descripteur.

Le deuxième fichier est une table supplémentaire ETAP qui permet la mise à jour de la table précédente. Elle est constituée de couples adresse logique -adresse physique qui donnent, pour une adresse logique donnée, l'adresse physique de la dernière version. Cette table n'est pas rangée suivant l'ordre croissant des adresses logiques ; il peut donc être préférable de la charger dans une mémoire externe pour accéder efficacement à la dernière version d'une adresse logique donnée. Cette table supplémentaire peut être mise à jour par adjonction comme la table principale.

La conversion d'une adresse logique en une adresse physique commence par la recherche de la dernière version de l'adresse logique dans la table supplémentaire ETAP. Si l'adresse logique est trouvée, l'adresse physique correspondante est sélectionnée. Dans le cas contraire, il y a accès direct à la table principale TAP, au rang donné par l'adresse logique, et obtention de l'adresse physique correspondante.

Périodiquement, les tables principale TAP et supplémentaire ETAP peuvent être fusionnées pour créer une nouvelle version de la table principale TAP mise à jour, et une nouvelle table supplémentaire ETAP initialement vide.

Revenons maintenant à l'adresse physique AP2 contenue dans le champ HU de la version d'en-tête actuelle. Cette adresse désigne l'emplacement dans le segment S2 du descripteur du répertoire R1 constituant la racine de l'arborescence.

La référence numérique 8 illustre en détail la structure de ce descripteur. Le champ DTA de ce descripteur contient les informations d'adresse et de longueur des zones du segments S3 contenant ledit répertoire R1.

Le contenu de ce répertoire est montré en détail sous la référence 10. On y a représenté les différents champs de données du répertoire et on y a indiqué la valeur de certains d'entre eux.

Comme le montre la figure 8, le répertoire R1 contient les répertoires R2, R3 et le fichier F1. La valeur du champ RNO du répertoire R1 est donc égale à 3. D'autre part, dans le champ d'opération OC associé au descripteur de chacun des répertoires R2, R3 et du fichier F1, on a inscrit l a valeur CR, pour indiquer que ledit répertoire et ledit fichier sont créés (l'autre valeur possible pour le champ d'opérations OC est le valeur "SP" indiquant une suppression).

Enfin, les champs d'adresse OA contiennent respectivement les valeurs ADESR2, ADESR3 et ADESF1 indiquant les adresses logiques des descripteurs DESR2, DESR3 et DESF1 dans le segment S2. Pour plus de clarté, on a représenté une seconde fois ce segment sur la figure 7 ; il porte la référence numérique 12.

On est ainsi passé du répertoire R1, constituant la racine de l'arborescence, aux répertoires R2, R3 et au fichier F1 qui se trouvent au niveau de noeuds immédiatement inférieur, en traduisant les adresses logiques ADESR2, ADESR3 et ADESF1 en adresses physiques APR2, APR3 et APF1, conformément au processus de conversion utilisant les tables TAP et ETAP. Le procédé peut être répété pour parcourir successivement chacun des niveaux de l'arborescence, et atteindre ainsi n'importe quel fichier mémorisé dans le support non-effaçable.

Par exemple, pour atteindre les fichiers F2 et F3, il faut accéder au contenu du répertoire R2 par l'intermédiaire de son descripteur DESR2. Celui-ci est représenté en détail sous la référence 14. Son champ DTA contient les informations nécessaires pour accéder au contenu du répertoire R2 contenu dans le segment S3.

Ce répertoire R2 est illustré en détail sous la référence 16. Il comprend les informations relatives à l'existence ou à la suppression du répertoire R4 et des fichiers F2, F3, et des adresses des descripteurs dudit répertoire et desdits fichiers dans le segment S2.

En ce qui concerne le fichier F1, son descripteur DESF1, dont le contenu est détaillé sous la référence numérique 18, permet d'accéder au contenu proprement dit du fichier, ceci par l'intermédiaire des informations contenues dans le champ DTA. A titre d'exemple, on a illustré le cas où ledit fichier était mémorisé dans deux zones distinctes dans le segment S4.

Enfin, le contenu du répertoire R3 est accessible par l'intermédiaire de son descripteur DESR3, de la même manière que le répertoire R2 l'est par son propre descripteur.

La figure 7 illustre la structure des objets manipulés par le procédé de gestion de fichiers de l'invention, et les relations logiques qui sont créées entre les différents types d'objets. La description qui précède montre que le procédé de l'invention, pour la gestion de fichiers sur un support non-effaçable, permet de gérer des fichiers suivant une architecture arborescente et permet une mise à jour de ces fichiers comme dans un procédé de gestion de fichiers sur un support effaçable, tel qu'un support magnétique.

Pour illustrer les possibilités offertes par le procédé de gestion de fichiers de l'invention, on va décrire les principales fonctions disponibles pour la gestion de fichiers, en relation avec la structure des objets manipulés par le procédé.

A titre d'exemple, on suppose que le support non-effaçable est un disque optique numérique organisé en secteurs.

ALLOCATION D'ADRESSES PHYSIQUES

Pour chaque segment, l'en-tête comporte un compteur (champ d'adresse SC) qui mémorise la valeur de la prochaine adresse physique pour l'écriture dans ce segment. Lorsqu'un objet d'une taille de N secteurs est écrit à cette adresse, le compteur est augmenté de N fois la taille d'un secteur. Les moyens permettant de charger ces compteurs et d'en mémoriser le contenu de façon permanente sont décrits dans la demande de brevet français n°85 17670

CREATION D'UNE ADRESSE LOGIQUE

La création d'une adresse logique, correspondant à un nouveau répertoire ou à un nouveau descripteur, se fait en augmentant de 1 la dernière adresse logique, et en ajoutant dans la table principale TAP l'adresse physique correspondante. Puisque la création d'adresse logique se fait de façon strictement continue, il y a simple adjonction à la table principale TAP, sans modification de la table supplémentaire ETAP.

ADJONCTION D'INFORMATION A UN OBJET MODIFIABLE

L'adjonction d'information à un objet préalablement enregistré sur le disque optique numérique utilise un postchamp. Il est possible d'ajouter un nombre quelconque d'informations de longueur quelconque, bien que cela ait une répercussion sur les temps d'accès.

Certains disques optiques numériques possèdent un postchamp réel, qui est une petite zone de données associée à chacun des secteurs, et qui peut être écrite indépendamment du secteur associé. Ceci peut être utilisé pour établir des chaînages. Pour les disques optiques numériques qui ne possèdent pas de postchamp réel, il est possible de le simuler. Un tel procédé de simulation est décrit dans la demande de brevet français n°85 17670, déjà citée.

Dans le cas d'un postchamp réel, le postchamp du dernier secteur alloué à l'objet contient initialement une valeur nulle. Lors d'une adjonction d'information à l'objet une suite d'adresses physiques est allouée à l'information d'adjonction. La première de ces adresses physiques est alors inscrite dans le postchamp du dernier secteur de l'information initiale. Le processus s'applique récursivement aux informations d'adjonction qui sont chaînées l'une à l'autre.

Dans le cas d'un postchamp simulé, un champ de chaînage est prélevé sur la longueur utile de chaque secteur au cas où le secteur est de type modifiable. L'adresse physique où sera inscrite une éventuelle modification future est allouée à l'avance, et enregistrée aussitôt dans le champ de chaînage qui est écrit avec les données du secteur (il n'y a donc pas d'écriture après coup comme dans un postchamp réel).

L'adjonction d'information ne peut être faite que pour les objets qui sont de type modifiable. Dans ce cas, la suite des opérations d'adjonction est analogue à celle décrite dans le cas du postchamp réel.

CREATION DE LA RACINE ET DES TABLES

L'initialisation d'un disque optique numérique géré suivant le procédé de l'invention requiert une opération de création initiale du répertoire formant la racine de l'arborescence et des emplacements des tables TAP et ETAP. Cette opération accompagne celle de création de l'en-tête.

Dans cette opération on peut définir des segments de taille quelconque. Une répartition possible des informations est la suivante :
- un segment S0 pour les versions de l'en-tête,
- un segment S1 modifiable pour les tables TAP et ETAP,
- un segment S2 non modifiable pour les descripteurs,
- un segment S3 modifiable pour les répertoires,
- un segment S4 non modifiable pour les contenus de fichiers.

Dans l'opération de création de la racine et des tables, les trois adresses logiques AL0, AL1 et AL2 se voient affecter chacune une adresse physique, où va être inscrit respectivement les descripteurs de type PI = "descripteur de fichier" pour les tables TAP et ETAP, et le descripteur de type PI = "descripteur de répertoire" pour la racine. Les différentes adresses physiques ainsi créées sont enregistrées dans la table TAP, qui est alors écrite sur le disque optique numérique. La table ETAP et le répertoire formant la racine sont vides.

Les trois adresses physiques sont alors intégrées dans les données utilisateur HU de l'information d'en-tête, et cette nouvelle version d'en-tête enregistrée dans le segment S0.

LECTURE DES TABLES ET DE LA RACINE

Lors de la première lecture du disque optique numérique, il y a accès à la plus récente version d'information d'en-tête en parcourant les versions successives jusqu'à atteindre une version d'en-tête qui n'ait pas de successeur. Les données utilisateur de cette information contiennent les adresses physiques des tables TAP et ETAP et de la racine.

CREATION D'UN REPERTOIRE

La création d'un répertoire vide est con stituée des deux opérations suivantes :
- allocation d'une adresse physique AP dans le segment S3 des répertoires. Cette zone contiendra les données du répertoire, à savoir un préambule, suivi d'une liste initialement vide d'opérations.
- création d'un descripteur de répertoire avec DNS ayant la valeur 1 et DTA contenant AP.

La création d'une série de descripteurs de fichiers, suivie de la création de leur répertoire permet de créer directement un répertoire non vide. Dans ce cas, la liste RLO est renseignée avec la succession des opérations correspondant à ces créations de descripteurs.

MISE A JOUR D'UN REPERTOIRE PAR AJOUT

La mise à jour d'n répertoire peut correspondre à :
- la création d'un nouveau descripteur,
- la suppression d'un descripteur existant.

Pour chaque opération, les champs correspondants vont être renseignés (OC = code de l'opération, OA = adresse logique retournée par l'opération de création de descripteur ou adresse logique du descripteur à supprimer). La liste des opérations RLO ainsi constituée est concaténée avec un préambule RP. Ce dernier contient les informations du préambule précédent du répertoire, sauf le champ séquence PS qui est incrémenté de 1. L'ensemble du bloc d'information est alors ajouté au répertoire existant, comme décrit au chapitre "adjonction d'information à un objet modifiable".

MISE A JOUR D'UN REPERTOIRE PAR CREATION DE VERSION

La mise à jour décrite précédemment crée des chaînes de modifications, qui peuvent ralentir les temps d'accès. Il peut être nécessaire de constituer une nouvelle version de répertoire, qui regroupe toutes ces informations en un seul bloc. Cette opération est réalisée simplement de la façon suivante :
- lecture du répertoire avec tous ses ajouts,
- création d'un nouveau répertoire à une nouvelle adresse physique AP. Le préambule RP voit sa version PV incrémentée de 1 et le champ PAVP est renseigné avec l'adresse physique de la version précédente du répertoire.
- création d'une nouvelle version du descripteur de répertoire, contenant la nouvelle adresse physique AP dans DTA. La version précédente du descripteur est chaînée à la nouvelle version du descripteur comme indiqué ci-dessous au chapitre "création d'une version de descripteur".

LECTURE D'UN REPERTOIRE

La lecture d'un répertoire se fait à partir de son descripteur. L'adresse physique du début du répertoire est la première adresse contenue dans DTA. La première liste d'opérations RLO est lue en mémoire. Si ce premier bloc avait fait l'objet d'une adjonction (postchamp du dernier secteur renseigné), il y a lecture de la liste d'opérations suivante, et ainsi de suite. Dans la liste des opérations en mémoire, qui contient les codes opération OC et les adresses OA, il y a élimination des adresses où OC = "suppression".

CREATION D'UN DESCRIPTEUR

La création d'un descripteur suit obligatoirement l'écriture de son contenu (il faut avoir constitué la table des adresses DTA). Elle se fait de la façon suivante :
- création d'une adresse logique AL avec allocation de son adresse physique AP dans le segment S2 des descripteurs,
- constitution du descripteur, avec son préambule DP, le champ éventuel de données utilisateur DU et la liste des adresses du contenu (DNS et DTA),
- écriture de ce descripteur à l'adresse physique AP.

CREATION D'UNE VERSION DE DESCRIPTEUR

Un descripteur n'est pas modifiable et ne peut évoluer que par création de version. Le descripteur doit avoir été préalablement constitué, soit avec l'écriture d'un nouveau fichier, soit avec mise à jour d'un fichier existant.

Le préambule du nouveau descripteur est identique à celui du précédent, sauf les champs suivants : la version PV est incrémentée de 1, l'adresse PAVP est renseignée avec l'adresse physique du descripteur précédent. La nouvelle version est ensuite créée de la même manière qu'un descripteur initial.

LECTURE D'UN DESCRIPTEUR

La lecture d'un descripteur se fait à partir de son adresse logique. Les deux tables TAP et ETAP sont utilisées pour en déduire l'adresse physique, comme décrit en référence à la figure 7. La lecture simple de la dernière version du descripteur situé à cette adresse physique donne toutes ses informations, dont les adresses physiques du contenu. Pour accéder aux versions précédentes, on suit le chaînage donné par PAVP.

CREATION D'UN FICHIER

La création du contenu d'un fichier se fait de la façon suivante :
- création d'une adresse logique AL, et allocation de son adresse physique AP dans le segment S4 des contenus de fichiers,
- initialisation du nombre de zones à 1, et de la première adresse du DTA avec AP,
- écriture du contenu du fichier à partir de cette adresse physique, pour un nombre entier N de secteurs. Tant qu'il n'y a pas d'erreur d'écriture, l'adresse physique progresse d'un secteur. S'il y a erreur d'écriture, le secteur erroné est ignoré et réécrit dans le secteur suivant ; le nombre de zones DNS est incrémenté de 1 et le champ DTA reçoit l'adresse du premier secteur où l'écriture a pu être réalisée avec succès.
- les champs DNS et DTA étant constitués, cette opération est suivie obligatoirement de la création du descripteur associé.

MISE A JOUR D'UN FICHIER

La mise à jour du contenu d'un fichier ne se fait que par adjonction, avec création d'une nouvelle version de descripteur. La procédure est la suivante :
- enregistrement du contenu de la mise à jour du fichier suivant la méthode précédente, avec attribution d'une nouvelle adresse physique dans le segment S4 (mais pas d'une adresse logique). Cette opération va créer une ou plusieurs zones, dont les adresses sont mémorisées dans une liste d'adresses NDTA de NDNS éléments,
- lecture du descripteur,
- ajout au nombre de segments DNS du nouveau nombre de segments NDNS venant d'être créés et à la liste DTA de la nouvelle liste NDTA,

- création d'une nouvelle version du descripteur.

## LECTURE D'UN FICHIER

La lecture d'un contenu de fichier se fait à partir de son descripteur. Les DNS zones, dont les adresses et longueurs sont données dans le descripteur (liste DTA), sont lues et ajoutées les unes aux autres pour constituer le contenu complet.

## RECHERCHE D'UN FICHIER OU D'UN REPERTOIRE PAR NOM ABSOLU

La recherche d'un fichier ou d'un répertoire se fait à partir de son nom absolu, c'est-à-dire de la succession des noms de répertoires, depuis la racine jusqu'au nom du fichier, en passant par tous les sous-répertoires.

La succession des opérations est la suivante : lecture du répertoire racine, et recherche de l'adresse logique du descripteur dont le nom correspond au premier nom de la chaîne. Le processus s'applique ainsi à tous les noms relatifs successifs qui composent le nom absolu. Tous les noms intermédiaires doivent correspondre à des descripteurs de répertoire (champ type OT = "descripteur de répertoire").

Le procédé permet différents types d'opérations :
- positionnement sur un répertoire par son nom absolu ou relatif,
- recherche d'un fichier par nom relatif (dans le répertoire sur lequel on est positionné).
- positionnement sur le répertoire contenant le répertoire courant.

Le procédé de gestion de fichiers de l'invention est d'utilisation très générale. Il peut être employé pour différentes applications, parmi lesquelles la réalisation d'un procédé de gestion de fichiers classique comme celui d'Unix (marque déposée), ou la réalisation d'un procédé particulièrement adapté à la gestion de documents numérisés.

Le procédé de gestion de fichiers selon l'invention décrit en référence aux figures 1 à 8, et pour lequel on a précisé les fonctions possibles, s'applique directement à la réalisation d'un procédé de gestion de fichiers de type classique sur disque optique numérique. Par exemple, une compatibilité avec le procédé de gestion de fichiers Unix (marque déposée) peut être assurée en définissant les paramètres suivants :
- une taille de secteur LS = 1024 octets,
- une adresse physique AP représentée sur 4 octets (soit 4294967296 valeurs possibles),
- une adresse logique AL représentée également sur 4 octets,
- un postchamp simulé qui occupe une adresse physique,
- un préambule de 25 octets où :
  . PI = 3 octets ("REP" pour répertoire, "DF" pour descripteur de fichier, "DR" pour descripteur de répertoire),
  . PF = 1 octet (initialisé à "1"),
  . PN = 14 octets
  . PS = 1 octet (256 valeurs possibles),
  . PV = 2 octets (65536 valeurs possibles),
  . PAVP = adresse physique de 4 octets,
- une opération de 20 octets où :
  . OC = 1 octet ("CR" pour création, "SP" pour suppression),
  . OA = adresse logique de 4 octets,
  . ON = 14 octets,
  . OT = 1 octet ("R" pour répertoire, "F" pour fichier),
- un répertoire où :
  . RNO = 2 octets (65536 valeurs) ; dans un secteur de longueurs LS = 1024, on peut ainsi inscrire 49 opérations. Ceci n'est pas une limite : un répertoire peut être écrit sur plus d'un secteur.
- un descripteur où :
  . DU = 64 octets, permettant d'enregistrer les caractéristiques complètes d'un "i-node" au sens du procédé de gestion de fichiers Unix,
  . DNS = 2 octets,
  . DTA = 4 octets pour l'adresse physique + 4 octets pour la longueur ; dans un secteur de longueur 1024, on peut ainsi inscrire 116 zones. Un descripteur peut être écrit sur plus d'un secteur.

Le procédé peut être adapté pour la gestion de documents numérisés (plans numérisés, pages de type télécopie, ...). Dans ce système, les documents sont constitués de pages, et peuvent être classés dans des dossiers. Les pages sont analogues aux fichiers du procédé, tandis que les documents et dossiers sont tous deux analogues aux répertoires.

Le procédé réalise un tel système en définissant des paramètres légèrement différents des précédents, à savoir :
- dans le préambule :
  . PI peut prendre les valeurs :
  . "DDS" pour descripteur de dossier
  . "DDC" pour descripteur de document,
  . "RDS" pour répertoire de type dossier,
  . "RDC" pour répertoire de type document,
  . "DP" pour descripteur de page,
- dans opération :
  . ON comporte le numéro de page si PI = "RDC",
  . OT peut prendre les valeurs "D" pour dossier, "F" pour document ou "P" pour page,

- dans le descripteur, le champ DU est différent en fonction du type PI :
  . DU contient les droits d'accès où PI = "DDS" ou "DDC",
  . DU contient une description des caractéristiques de la page dans le cas où PI = "DP". Ces caractéristiques peuvent être par exemple :
    - taille de la page,
    - résolution de saisie,
    - type de codage,
    - orientation,

Dans cette application, la partition définie sur l'espace de mémorisation peut comprendre six segments :
- un segment S0 pour les versions de l'en-tête,
- un segment S1 modifiable pour les tables TAP et ETAP,
- un segment S2 non modifiable pour les descripteurs de dossiers et de documents,
- un segment S3 non modifiable pour les descripteurs de page,
- un segment S4 modifiable pour les répertoires de type dossier et document,
- un segment S5 non modifiable pour les contenus des pages.

Cette segmentation permet en particulier de limiter la taille des segments S2 et S4, ce qui autorise leur chargement en mémoire pour augmenter la vitesse de recherche.

Par segment modifiable, on entend que chaque objet du segment peut être modifié par adjonction d'information. Ceci suppose que le support non-effaçable comporte des postchamps réels, ou que lesdits objets sont munis d'un postchamp simulé tel que le champ de chaînage PTR des objets représentés sur les figures 2, 4 et 5.

**Revendications**

1. Procédé de gestion de fichiers sur un support d'information non-effaçable, ledit procédé consistant à mémoriser des objets de type en-tête ($ET_i$), fichiers (F) et répertoires (R), lesdits fichiers et répertoires contenant des données dont l'accès est défini par un objets de type descripteur (DES) associé à chacun desdits fichiers et répertoires, lesdits répertoires et lesdits fichiers étant mémorisés selon une architecture arborescente ($R_1$, $R_2$ ... fig.8) dont les fichiers forment les noeuds terminaux, ladite arborescence comprenant un répertoire racine ($R_1$), ledit procédé étant caractérisé en ce que l'espace de mémorisation du support non-effaçable est découpé en plusieurs segments ($S_\phi$, $S_1$, $S_2$, $S_3$, $S_4$) formant une partition de cet espace de mémorisation, ladite partition comprenant au moins :

- un premier segment (S0) pour mémoriser des versions sucessives d'un en-tête (ET), lesdites versions étant inscrites séquentiellement dans ledit segment, chaque version d'en-tête comprenant au moins un champ d'identification (PI) du support, un champ de listage (HLS) pour contenir la liste des paramètres physiques définissant les segments ($S_\phi$, $S_1$, $S_2$, $S_3$, $S_4$) formant la partition de l'espace de mémorisation et un champ de données (HU) pour contenir une première adresse physique ($AP\phi$), une deuxème adresse physique (AP1) et une troisième adresse physique (AP2),

- un deuxième segment (S1) pour mémoriser des versions successives d'une table de conversion pour convertir une adresse logique d'un objet en une adresse physique dudit objet, lesdites versions étant inscrites séquentiellement dans ledit segment, chaque version de ladite table comprenant une table principale (TAP) établissant une correspondance entre une adresse logique et une adresse physique, pour les objets créés au moment de la création de ladite table principale ou pour les objets créés ultérieurement et correspondant à une nouvelle adresse logique, et une table supplémentaire (ETAP) établissant une correspondance entre une adresse logique et une adresse physique, pour les mises à jour des adresses logiques contenues dans la table fixe, les adresses desdites tables principale et supplémentaire étant inscrites lors de la mémorisation d'une nouvelle version d'en-tête respectivement dans la première et la deuxième adresses physiques ($AP\phi$, AP1) du champ de données de l'en-tête (HU),

- un troisième segment (S2) pour mémoriser des descripteurs (DES) de fichiers ou de répertoires, chaque descripteur comprenant au moins un préambule (DP) et un champ de listage, le préambule comprenant au moins un champ d'identification (PI) pour identifier le type fichier ou répertoire décrit et un champ de chaînage (PAVP) pour relier deux versions successives d'un même descripteur, et le champ de listage (DTA) contenant la liste des adresses physiques et des longueurs des zones du support non-effaçable contenant le fichier ou le répertoire, l'adresse physique du descripteur du répertoire racine ($R_1$) étant contenu dans la troisième adresse physique (AP2) des données utilisateurs (HU) de la version actuelle de l'en-tête (ET$_i$),

- un quatrième segment (S3) pour mémoriser des répertoires (R), chaque répertoire comprenant au moins un préambule (RP) et une liste d'opérations (RLO), le préambule comprenant un identificateur de répertoire (PI) et un champ de chaînage (PAVP) pour refier deux versions successives d'un même répertoire, et la liste d'opérations (RLO) comprenant la liste des adresses logiques (OA) des descripteurs de fichiers et de répertoires contenus dans ledit répertoire et des codes opération (OC) pour indiquer l'état existant ou supprimé de chacun desdits fichiers et répertoires dans ledit répertoire,
- un cinquième segment (S4) pour mémoriser le contenu des fichiers (F).

2. Procédé selon la revendication 1, caractérisé en ce que pour l'inscription d'une nouvelle version d'en-tête (ET$_{n+1}$) en remplacement de la version actuelle d'en-tête (ET$_n$),lorsque le segment (S0) contenant les versions successives d'en-tête est plein, on crée un nouveau segment, on inscrit ladite nouvelle version d'en-tête dans ledit nouveau segment, et on réalise un chaînage entre ladite nouvelle version d'en-tête et ladite version actuelle d'entête.

3. Procédé selon l'une quelconque des revendications 1 et 2, caractérisé en ce que les objets de type répertoire comportent un champ de chaînage (PTR) permettant une mise à jour du contenu desdits objets.

4. Procédé selon l'une quelconque des revendications 1 à 3, pour la gestion de document numérisés, caractérisé en ce que les objets de types répertoires comprennent des dossiers et des documents, les répertoires de type document étant rattachés à des répertoires de type dossier, et les objets de type fichier sont des pages rattachées à des répertoires de type document, le troisième segment ne recevant que les descripteurs de répertoires et l'espace de mémorisation comprenant un sixième segment pour recevoir les objets de type descripteurs de pages, lesdits descripeurs comprenant un préambule muni d'un champ de mémorisation d'au moins l'une des caractéristiques suivantes : taille de la page, résolution de la saisie, type de codage, orientation de la page.

**Claims**

1. Process for the management of files on a non-erasable information carrier, said process comprising storing objects of the header (ET$_i$), file (F) and directory (R) types, said files and directories containing data, whose access is defined by a descriptor-type object (DES) associated with each of said files and directories, said files and directories being stored in accordance with a tree-like architecture (R$_1$, R$_2$ ... fig. 8), whereof the files form the terminal nodes or knots, said tree incorporating a root directory (R$_1$), characterized in that the storage space of the non-erasable carrier is subdivided into several segments (2) forming a partition of said storage space, said partition have at least:
a first segment (S0) for .storing successive versions of a header (ET), said versions being sequentially written into said first segment, each header version having at least one identification field (PI) for the carrier, a listing field (HLS) for containing the list of the physical parameters defining the segments (S$_\phi$, S$_1$, S$_2$, S$_3$, S$_4$) forming the partition of the storage space and a data field (HU) for containing a first physical address (AP$\phi$), a second physical address (AP1), and a third physical address (AP2),
a second segment (S1) for storing successive versions of a conversion table for converting a logic address of a descriptor into a physical address of a descriptor, said versions of said table being sequentially written into said second segment, each version of said table having a main table (TAP) establishing a correspondence between a logic address and a physical address, for the physical addresses of the zones of the storage space containing an information at the time of the creation of said main table or for subsequently created objects and corresponding to a new logic address, and a supplementary table (ETAP) establishing a correspondence between a logic address and a physical address, for updatings of logic addresses contained in the main table, the addresses of said main and supplementary tables of the most recent version of the conversion table being written during the storage of a new header version respectively into the first physical address and into the second physical addresses (AP$\phi$, AP1) of the data field of said header (HU),
a third segment (S2) for storing descriptors (DES) of files or directories, each descriptor having at least one preamble (DP) and a listing field, the preamble having at least one identification field (PI) for identifying the file or directory type described and a chaining field (PAVP) for connecting two successive versions of the same descriptor, and the listing field (DTA) containing the list of physical addresses and the lengths of the zones of the non-erasable support containing the file or directory, the physical address of the root directory ($R_1$) being contained in the third physical address (AP2) of the data field (HU) of the present header ($ET_i$) version, a fourth segment (S3) for storing directories (R), each directory having at least one preamble (RP) and an operations list (RLO), the preamble having at least one directory identifier (PI) and a chaining field (PAVP) for linking two successive versions of a same directory and the operations list (RLO) having the list of logic addresses (OA) of the file and directory descriptors contained in said directory and operations codes (OC) for indicating the existing or eliminated states of each of the said files and directories of said directory, a fifth segment (S4) for storing the content of the files (F).

2. Process according to claim 1, characterized in that for entering a new header version ($ET_{n+1}$) as a replacement for the present header version ($ET_n$) when the segment (SO) containing successive header versions is full, a new segment is created, said new header version is entered in said new segment and chaining is brought about between said new header version and said present header version.

3. Process according to one of the claims 1 and 2, characterized in that the objects of the directory type have a chaining field (PTR) permitting an updating of the content of said objects.

4. Process according to any one of the claims 1 to 3 for the management of digitized documents, wherein the objects of the directory type incorporate dossiers and documents, the directories of the document type being linked with directories of the dossier type and objects of the file type have pages linked with directories of the document type, the third segment only receiving directory descriptors and the storage space having a sixth segment for receiving objects of the page descriptor type, said descriptors having a preamble provided with a field for storing at least one of the characteristics: page size, acquisition resolution, coding type and page orientation.

## Patentansprüche

1. Verfahren zur Verwaltung von Dateien auf einem Nur-Lese-Informationsträger, umfassend die Speicherung von Objekten vom vorderen Typ ($ET_i$), von Dateien (F) und Registern (R), wobei die Dateien und Register Daten enthalten, deren Zugang durch ein Objekt vom Beschreibertyp (DES) definiert ist, das jedem der Dateien und Register zugeordnet ist, wobei die Register und die Dateien in einer baumartig verzweigten Architektur (R1, R2 .... Fig. 8) gespeichert sind, von denen die Dateien die Endknoten bilden, wobei die Baumarchitektur ein Wurzelregister (R1) enthält, **dadurch gekennzeichnet,** daß der Speicherraum des Nur-Lese-Trägers in mehrere Segmente (S0, S1, S2, S3, S4) und unterteilt sind, die eine Unterteilung dieses Speicherraums bilden, wobei die Unterteilung wenigstens enthält:

ein erstes Segment (S0) zum Speichern aufeinanderfolgender Versionen eines Kopfes (ET), wobei die Versionen sequentiell in das genannte Segment eingeschrieben werden, jede Version eines Kopfes wenigstens ein Identifikationsfeld (Pi) des Trägers, ein Listenfeld (HLS) zum Aufnehmen der Liste der physischen Parameter, die die Segmente (S0, S1, S2, S3, S4) definieren, enthält, die die Unterteilung des Speicherraums bilden und ein Datenfeld (HU) enthält, um eine erste physikalische Adresse (AP0), eine zweite physikalische Adresse (AP1) und eine dritte physikalische Adresse (AP2) aufzunehmen,

ein zweites Segment (S1) zum Speichern aufeinanderfolgender Versionen einer Umwandlungstabelle, um eine logische Adresse eines Objekts in eine physikalische Adresse des Objekts umzuwandeln, wobei die genannten Versionen sequentiell in das Segment eingeschrieben werden, jede Version der Tabelle eine Haupttabelle (TAP) enthält, die eine Korrespondenz zwischen der logischen Adresse und der physikalischen Adresse herstellt, für die Objekte, die im Augenblick der Erzeugung der genannten Haupttabelle erzeugt werden, oder für die Objekte, die schließlich und entsprechend einer neuen logischen Adresse erzeugt werden, und eine Zusatztabelle (ETAP), die eine Korrespondenz zwischen der logischen Adresse und einer physikalischen Adresse herstellt, um die logischen Adressen zu aktualisieren, die in der festen Tabelle enthalten sind, wobei die Adressen der genannten Haupttabelle und der zusätzlichen Tabelle bei der Speicherung einer neuen Version des Kopfes jeweils in die ersten und zweiten physikalischen Adressen (AP0, AP1) des Datenfeldes des Kopfes (HU) eingeschrieben werden,

ein drittes Segment (S2) zum Speichern der Descriptoren (DES) der Dateien oder der Register, wobei jeder Descriptor wenigstens eine Präambel (DP) und ein Listenfeld enthält, wobei die Präambel wenigstens ein Identifikationsfeld (PI) zur Identifizierung der beschriebenen Art Datei oder Register und ein Verkettungsfeld (PAVP) enthält, um zwei aufeinanderfolgende Versionen eines gleichen Descriptors zu verbinden, und daß Listenfeld (DTA) der Liste der physikalischen Adressen und die Längen von Zonen des Nur-Lese-Trägers enthält, die die Datei oder das Register enthalten, wobei die physikalischen Adresse des Descriptors des Wurzelregisters (R1) in der dritten physikalischen Adresse (AP2) der Benutzerdaten (HU) der aktuellen Version des Kopfes (ET$_i$) enthalten sind,

ein viertes Segment (S3) zum Speichern von Registern (R), wobei jedes Register wenigstens eine Präambel (RP) und eine Liste von Operationen (RLO) enthält, wobei die Präambel einen Registeridentifizierer (PI) und ein Verkettungsfeld (PAVP) für die Verbindung zweier aufeinanderfolgender Versionen eines gleichen Registers enthält und die Liste der Operationen (RLO) die Liste der logischen Adressen (OA) der Datei- und Registerdescriptoren enthält, die in dem Register enthalten sind und die Operationscodes (OC) zum Angeben des existierenden oder unterdrückten Zustandes jeder der Dateien und Register in dem genannten Register,

ein fünftes Segment (S4) zum Speichern des Inhalts der Dateien (f).

2. Verfahren nach Anspruch 1, **dadurch gekennzeichnet,** daß für das Einschreiben einer neuen Kopfversion (ET$_{n+1}$) bei Ersatz der aktuellen Kopfversion (ET$_n$) man dann, wenn das Segment (SO), das die aufeinanderfolgenden Kopfversionen enthält, voll ist, ein neues Segment erzeugt, man die neue Kopfversion in das neue Segment einschreibt und man eine Verkettung zwischend der genannten neuen Kopfversion und der genannten aktuellen Kopfversion herstellt.

3. Verfahren nach einem der Ansprüche 1 und 2, **dadurch gekennzeichnet,** daß die Objekte vom Registertyp ein Verkettungsfeld (PTR) enthalten, das eine Aktualisierung des Inhalts der genannten Objekte ermöglicht.

4. Verfahren anch einem der Ansprüche 1 bis 3 für die Verwaltung digitalisierter Dokumente, **dadurch gekennzeichnet,** daß die Objekte vom Typ Register Akten und Dokumente sind, wobei die Register vom Typ Dokument den Registern vom Typ Akte verknüpft sind und die Objekte vom Typ Datei Seiten sind, die den Registern vom Typ Dokument zugeordnet sind, das dritte Segment nur Registerdescriptoren aufnimmt und der Speicherraum ein sechstes Segment zur Aufnahme der Objekte vom Typ Seitendescriptoren enthält, wobei die genannten Descriptoren eine Präambel enthalten, die mit einem Speicherfeld für wenigstens eine der nachfolgenden Merkmale versehen ist: Größe der Seite, Zugriffsauflösung, Codiertyp, Orientierung der Seite.

EP 0 263 014 B1

| S∅ | S1 | S2 | S3 | S4 |
|---|---|---|---|---|
| (ET) | (TAP/ETAP) | (DES) | (R) | (F) |

**FIG. 1**

EN-TETE (ET)

| PREAMBULE | | | CORPS | | | | CHAINAGE |
|---|---|---|---|---|---|---|---|
| PI | PF | PN | HV | HNS | HLS | HU | PTR |

| SN | SDEB | SFN | SC | SU | | |
|---|---|---|---|---|---|---|

(S1)  (S2)

**FIG. 2**

| S∅ | | | | S3 | S∅ | S4 |
|---|---|---|---|---|---|---|
| ET1 | ET2 | | ETn | | ETn+1 | |

**FIG. 3**

EP 0 263 014 B1

PREAMBULE (DP)      CORPS      CHAINAGE

| PI | PF | PN | PS | PV | PAVP | PT | DU | DNS | DTA | PTR |
|----|----|----|----|----|------|----|----|-----|-----|-----|

DESCRIPTEUR (DES)

## FIG. 4

PREAMBULE (RP)      CORPS      CHAINAGE

| PI | PF | PN | PS | PV | PAVP | PT | RNO | RLO | PTR |
|----|----|----|----|----|------|----|-----|-----|-----|

REPERTOIRE (R)

## FIG. 5

| OC | OA | ON | OT | | |
|----|----|----|----|----|----|

D1      D2

| DONNEES |
|---------|

FICHIER (F)
OU TABLE (TAP/ETAP)

## FIG. 6

FIG. 8

FIG. 7